# EUROPEAN PATENT APPLICATION

(11) **EP 4 250 265 A1**
(43) Date of publication of application: **27.09.2023**
(21) Application number: 20961782.8
(22) Date of filing: 20.11.2020

(54) **METHOD FOR TRANSMITTING AND TRACKING PARAMETERS DETECTED BY DRONES BY MEANS OF A PLATFORM AS A SERVICE (PAAS) WITH ARTIFICIAL INTELLIGENCE (AI)**

(71) Applicant: Drovid Technologies, Santiago, 7770080 (CL)
(72) Inventor: LEÓN IBARRA, Cristian Rodrigo, Santiago, 7770080 (CL)
(74) Representative: Jacobacci Coralis Harle
(86) International application number: PCT/CL2020/050160
(87) International publication number: WO 2022/104489

(57) **Abstract**

The invention discloses a method and a system combining: the detection of parameters by means of unmanned aerial vehicles (RPA) and unmanned aerial systems (UAS), a graphical interface for triggering alerts, the adaptation of a neural network for classifying a plurality of data, a computer sequence for transmitting data, a module for intercommunication between drones, methods and applications for predictive analysis, a method for evaluating activities with artificial intelligence, an autonomous management process in the cloud. The method integrates, tracks the execution procedure of corrective and preventive actions on the detected and transmitted parameters. The system is implemented through a platform (PaaS) to manage, control and record the process, and to combine the activity of a plurality of drones.

## Description

Method to transmit and track parameters detected by drones using (PaaS) with (Al).

### TECHNICAL SECTOR

Currently, surveillance solutions are implemented for public security using RPAs¹ whose main objective is oriented to the investigation to collect background information on criminal acts and their resolution. The system has a software for the management and taking of photographs or remote recording remotely controlled. The operation of the system requires a minimum of two operators: while one pilots the drone, the other controls the cameras to capture the images from remote aerial shots.
¹ See report Tipología sistema de Teleprotección, Subsecretaria Prevención del Delito, 2019 in: *http:*//*www.seguridadpublica.gov.cl*/*media*/*2019*/*07*/*Sistemas-de-Teleproteccion.pdf*

In forest fire prevention, drone solutions mainly support the management and control of forest fires, with the use of on-board cameras, which are controlled with software packages that deliver details such as isotherm allocation (temperature detail per object), and also areas can be selected on the control panel (touch screen) delivering exact temperature irradiance data. This is used to determine the epicenters in the control of active fires, and create action plans to mitigate their spread; this technique is mainly used in most developed countries. In Chile, the National Forestry Corporation (CONAF) has recently incorporated the use of RPAs to capture video and images in visible and thermal mode to use this method in the investigation and control of forest fires².
² Reference at https://www.conaf.cl/conaf-refuerza-prevencion-de-incendios-forestales-con-uso-de-drones-en-biobio/

The main technical problems:
- Neglect of fundamental activities such as the management and capture of information. Field operators must have storage media such as CDs, memory cards, hard disks, or other devices to back up the information obtained from the recordings.
- It requires traceability control. Since, the information gathering is stored in physical media, which forces to use human resources for this matter, or also to allocate working hours of those in charge of solving the problems for this function, which also implies a decrease in productivity.
- It is susceptible to leakage or loss of confidential information. Since, traceability control can fail.
- Data can be intentionally deleted. Since, backups on hard disks can be easily erased and all information can be lost. And as in the case of CDs, it requires traceability control.
- It is possible to transmit live RPA recordings to a medium such as a television channel, the technical problem is that it is an economically expensive procedure, requires a lot of logistics, and is only feasible on special occasions.
- Significant loss of time in the information chain to the addressee in charge of resolving the situation. When RPA operators detect an incident such as fire, assault, theft, accident, accident, health emergency, etc., they must call a central office to report the incident, provide technical details, address and often location details, so that the central office can later transmit the information to third parties.
- They do not have a system that allows them to efficiently track the activities and procedures of those responsible for solving problems, nor those of their direct superiors. This means that the current system is susceptible to negligence, with information that is easy to alter and hide, and at the same time it has a negative impact on productivity.
- They do not have a rapid communication and information dissemination system in case of detection of a public safety problem. Neither in the detection of a critical point at a distance, for example, a glass bottle at high temperature, risking the loss of important time.
- They do not have a server in the cloud (*cloud* systems) to store the information directly and securely and in turn allow access to it through an authorized account to directly review statistical information in the macro database.
- They do not have a system that can predict fires with the application of data science, predictive analytics, and machine learning so that drones can be used as UAS and can make data-driven decisions.
- They do not have an emergency system to provide permanent and automated firefighting support in the event that the RPAs and UAS run out of battery power, leaving the brigades in charge of the extension of the fire without information support.
- The information collected in firefighting is stored on physical media such as memory cards, CDs, or downloaded to PCs or Notebooks for processing and expertise. These procedures can sometimes incur risks of loss of information.

### PREVIOUS TECHNIQUE

Drone technology is advancing rapidly, with hardware sophistication and improved flight autonomy. This has allowed this technology to be used in several countries around the world for border control, forest fire fighting and prevention, public safety, emergency situations, information work, agricultural cultivation, predictive maintenance, and revision of productive and industrial sectors, and in construction. The importance of the software lies in the fact that it is the fundamental element for drones to fly, but also defines the additional capabilities they may have. Drone manufacturers sell their equipment with the company's own software. In turn, there are also companies that specialize in software development and offer the service in SaaS (Software as a Service) mode, whose model consists of general management and support by the service provider, to simplify, customize and automate the flight path, image acquisition and data capture. The main drone manufacturers worldwide; DJI, Parrot, Syma, have chosen to market their drones with Open Source systems, a system that works with open source software, allowing companies to opt for customized solutions. This means that external developers and technology companies have the ability to access the equipment, i.e., you can format the memory and internal hardware and perform the integration of externally developed software. These can range from mobile applications to advanced software platforms designed by specialized companies.

The developers of this type of software are mainly foreign companies, which have developed their own platforms. The solutions created and currently in operation allow volumetric analysis or terrain modeling; data processing in the cloud generating 3D models and automation of inspections. Images can be automatically processed for the detection of elements of interest. Drones generate large volumes of data, and through artificial intelligence algorithms, it has been possible to obtain actionable data such as: vehicle counts, used by the Nissan brand in its manufacturing plant in Brazil, to streamline its inventory processes, and the detection of structural defects thanks to the research and development work of the European Union's Horizon 2020 Research Program. Data processing can generate additional information through aerial images with the photogrammetry technique, being able to generate georeferenced maps, 3D surveys and obtain precise measurements of area, volumes, and relief. This technology is currently being used mainly for large mining and industrial projects where GNSS (Global Navigation Satellite System) technology is widely used, whose best known system, but not the only one, is the GPS (Global Positioning System) to determine the coordinates of any point on the earth's surface and with great precision, this system has a significant importance in terms of mapping, in order to accurately locate the elements to be digitized to avoid errors in terms of their position in space.

In public safety, it is used to support police operations; it is also used in response to emergencies, natural disasters and for the quantification of damages generated.

Drones offer the possibility of obtaining computer vision and artificial intelligence, reducing costs and time. They are also used to check insulation in high-voltage pylons and to count vehicles. In Africa (a leading continent in drone traffic regulations) they have been used for vaccine distribution and disaster response and cyclone mapping in Ghana, Tanzania, and Rwanda by the U.S. company Zipline. Rwanda has also built the world's first airport for unmanned aircraft and there are also local initiatives, such as the Charis UAS company.

Private cloud processing technology is the latest way to secure storage and is rapidly advancing in new functionalities, it has been fundamental in the scaling of technology companies around the world, and in different areas, as it allows working with large amounts of data.

Some references obtained from the Patentscope database, which are directly related to the subject matter associated with the present invention, are attached:
Application request: 201780028204.8.
   Title (EN) drone patrol planning method, control terminal, drones, and drone system.
   Applicant: DJI INNOVATIONS CO LTD.
Application No.: 201810249896.5.
   Title: Drone aerial photo library construction, sorting, and retrieval method suitable for energy inspection.
   Applicants: FUZHOU UNIVERSITY.
Application No.: 18728174.
   (EN) METHOD OF VIDEO SURVEILLANCE USING AT LEAST ONE AUTONOMOUS DRONE AND DEVICE FOR ITS IMPLEMENTATION.
Application No.: 102017000451240.
   RESCUE AND EARLY WARNING FIRE DANGER COMMAND SYSTEM AGAINST FOREST FIRES BASED ON FLYING DRONES.
   Applicant: JIANGSU SUDU ELECTRONIC TECHNOLOGY CO., LTD.
Application No.: PCT/IB2019/050065.
   SYSTEM AND METHOD FOR EXECUTING OPERATIONS ON AN OBJECT USING DRONES. Applicant: FONDAZIONE LINKS - LEADING INNOVATION & KNOWLEDGE FOR SOCIETY.
Application No.: 16852804.
   BY MEANS OF DROPLETS THAT STRENGTHEN AND STRENGTHEN THE STRUCTURE.
   Applicant: ALARM COM.
Application No.: 201811645226.1.
   METHOD OF MULTI-PLATFORM COORDINATION OF SEVERAL DRONES.
   Applicant: SHENZHEN D.Y. INNOVATIONS TECHNOLOGY CO., LTD. Inventor: Ll JUNHAO.
Application No.: 201811572292.0.
   CONSOLE FOR MULTIPLE DRONES.
   Applicant: QIBU INTELLIGENT TECHNOLOGY (SHANGHAI) CO.
Application No.: 16355443.
   ON-DEMAND OUTDOOR IMAGE-BASED LOCATION TRACKING PLATFORM.
   Applicant: Bridgewest Ventures LLC.
Application No.: PCT/KR2016/011654.
   SURVEILLANCE SYSTEM AND METHOD USING DRONES.
   Applicant: JO, Seong Chul.
Application No.: 1020180015625.
   DRONE SURVEILLANCE SYSTEM.
   Applicant: 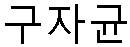 Inventor/a KOO, JA KYUN.
Application No.: 1020160083642.
   Applicant: RENZULLI EDUTAINMENT CO.
Application No.: PCT/CN2018/099216.
   COMMUNICATION METHOD AND COMMUNICATION DEVICE FOR CONTROLLERLESS AERIAL VEHICLES AND UNCONTROLLED AERIAL VEHICLES.
   Applicant: AUTEL ROBOTICS CO., LTD.
Application No.: 201810690031.2.
   MOUNTAIN FIRE TRANSMISSION LINE BASED ON THE BEIDOU SATELLITE TRANSMISSION SYSTEM.
   Applicant: WUHAN ZHIWANG XINGDIAN TECHNOLOGY DEVELOPMENT CO.
Application No.: 15917240.
   SYSTEMS AND METHODS TO CONTROL A FLEET OF DRONES FOR DATA COLLECTION.
   Applicant: State Farm Mutual Automobile Insurance Company.
Application No.: 2020203351.
   EMERGENCY RESPONSE SERVICES AUGMENTED WITH DRONES.
   Applicant: Alarm.Com Incorporated.
Application No.: 14965788.
   SYSTEMS AND METHODS FOR EVENT MONITORING USING AERIAL DRONES.
   Applicant: Parachute Systems, Inc.
Application No.: 16165003.
   SYSTEMS AND METHODS FOR OPERATING DRONES IN RESPONSE TO AN INCIDENT.
   Applicant: State Farm Mutual Automobile Insurance Company.
Application No.: 15967534.
   FIRE SUPPRESSION SYSTEM AND METHOD USING ARTIFICIAL INTELLIGENCE.
   Applicant: James E. Beecham.
Application No.: 16264018.
   SYSTEMS AND METHODS FOR OBTAINING AND USING LOCATION DATA.
   Applicant: National Geospatial-Intelligence Agency.
Application No.: 201600652.
   DRONE EQUIPMENT FOR SURVEILLANCE AND ASSISTANCE AGAINST FOREST FIRES.
   Applicant: DAVILA MEILAN.
Application No.: 1020170018152.
   SYSTEM AND METHOD FOR PROVIDING AN OPTIMAL DRONE PATH IN AREAS WHERE A WILDFIRE OCCURS.
   Applicant: 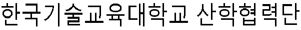 .
Application No.: 15236192.
   SYSTEMS AND METHODS FOR OPERATING DRONES IN RESPONSE TO AN INCIDENT.
   Applicant: State Farm Mutual Automobile Insurance Company.
Application No. 2019112954.
   METHOD OF EXTINGUISHING FIRES OF HIGH INSTALLATIONS NOT AVAILABLE FOR FIRE EXTINGUISHING BY LADDERS, FOR WHICH THE USE OF FIRE EXTINGUISHING WITH LARGE AMOUNTS OF WATER AND EXPLOSIVE TECHNOLOGY IS EXCLUDED.
   Applicant: 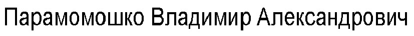 (RU).
Application No.: 1020160133197.
   DRONE CRIME PREVENTION METHOD.
   Applicant: 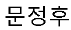 .

### DISCLOSURE OF THE INVENTION

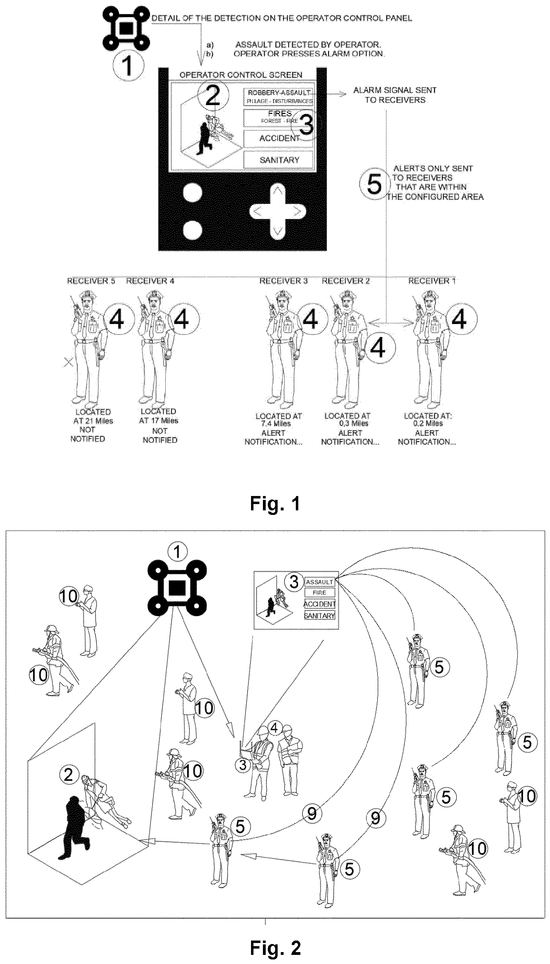

The invention consists of a method and system used to manage and automate drone fleets Fig. 2 (1), through a platform as a service (PaaS).

The drones incorporated into the platform are used in two modes: as remotely piloted aerial vehicles (RPAs), i.e., controlled by an operator, and as unmanned aerial systems (UAS) by programming autonomous flights from the platform.

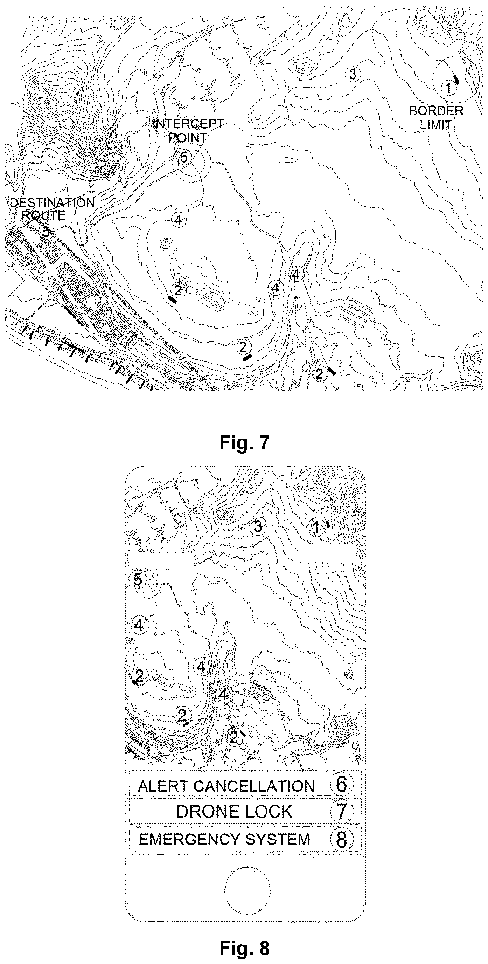

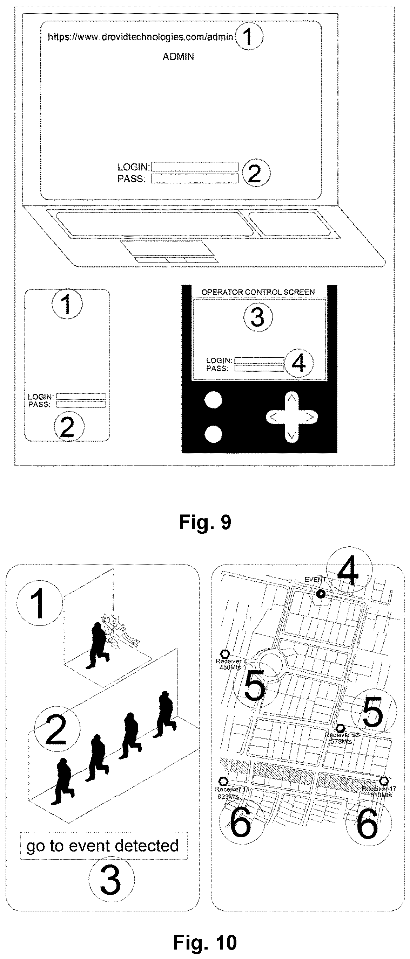

The platform is organized into client accounts, and each account has the following configuration: operators, receivers and administrator.
- Operators: Fig. 2 (4) are in charge of piloting the RPAs Fig. 2 (1), they enter the platform with their routine and password Fig. 9 (4) from the interface integrated in the touch screen of the remote control of the drones Fig. 9 (3), and their work is mandatory in areas where the aeronautical regulations of each country require it.
- The receivers: Fig. 2 (5) in case of an abnormality or problem, hereinafter "events" Fig. 2 (2) and detected by the on-board cameras in the drones Fig. 2 (1), operating as RPAs or UAS Fig. 2 (1), will be responsible for attending the alarm alerts Fig. 1 (5) and go to the event site to execute the corrective actions to the problems detected by the RPAs and UAS Fig. 2 (2). The receivers are entered at the moment of the creation of the client account with the assignment of their schedules and vacation periods (configurable).
- The administrator: is the account manager, has access to the platform through private login through the platform's responsive web page Fig. 9 (1) compatible for use on computers and smartphones, enters with his or her password or digital certificate Fig. 9 (2) to access the database with the statistics of each event Fig. 2 (6), with options to filter and average the statistical data in graphs. The administrator organizes and controls the complete operation of the client account associated to the platform, plans the tasks of the operators Fig. 2 (4) and receivers Fig. 2 (5), and among his responsibilities is to keep the data of the receivers and operators up to date. In case of an event Fig. 2 (1), the administrator as well as the receivers Fig. 2 (5), receives the alarm notification Fig. 1 (5) to review the event live Fig. 8 (1) and has access to review the detail. He is also the only one qualified and enabled to cancel the alerts Fig. 8 (6), if the alert is canceled, the action is registered in the platform without being able to be deleted from the records, and instantly a box is displayed in the user interface of the PC or smartphones, where he must justify the reason for the cancellation of the alarm.

In RPAs mode Fig. 1 (1) the operator Fig. 2 (4) detects the event Fig. 2 (2) through the image obtained by the drone camera and projected on the screen of his remote-control Fig. 1 (2). Upon detection of the event Fig. 2 (2), the operator Fig. 2 (4) and activates an alarm signal Fig. 1 (5) by pressing one of the options directly accessible from the RPAs control touch panel Fig. 1 (3). These alerts are sent Fig. 2 (9) directly to those in charge of executing the corrective action associated with the event (receivers) Fig. 1 (4), taking as a criterion the receivers Fig. 2 (5) that are closest to the location of the event Fig. 2 (2).

The platform is designed to adapt to public sector organizations and has the capacity (optional) to assign the differentiated alerts Fig. 1 (3) to combine to different categories of customized receivers Fig. 2 (10) according to the type of event detected, and send the alarm signal Fig. 2 (9) to the receivers Fig. 1 (4), associated to the type of event detected Fig. 2 (2). This option is designed to be used mainly in organizations where multiple problems of different types need to be addressed in a customized manner. For the selection of the alarm signal sending mode Fig. 2 (9), the platform has three options (configurable): each one recommended for different cases.
- a) Configuration of perimeter limits (configurable), classified into: 1) kilometer and/or meter radius, according to the coordinates of the physical location of the detected parameter. 2) configuration by sectorial perimeter limit, such as states, regions, cities or municipalities. In addition, it allows configuring the minimum and maximum limit of the receivers Fig. 2 (5) that receive the alert notification, and that are located within the configured limit.
- b) the drones Fig. 2 (1) operating as RPAs and/or UAS, are able to automatically recognize the receivers Fig. 10 (5)(6) that are closest and most expedient to the event location Fig. 10 (4), to differentiate to which receivers Fig. 2 (5) sends the alarm notification Fig. 2 (9). This mode also allows to customize the number (minimum and/or maximum) of receivers that receive the alerts Fig. 2 (5) sent by the drones.
   c) Configuration to add to options (a) and (b) the option to assign differentiated time ranges, to assign the minimum and maximum quantities of receivers Fig. 1 (4) associated to an event, according to the demand of its activities.

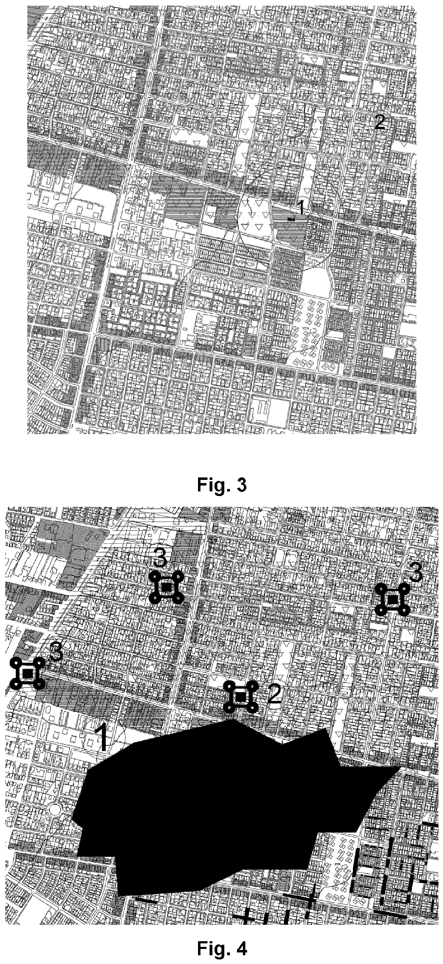

In UAS mode, flights are programmed from the platform, and a monitoring area is assigned to detect abnormalities autonomously. This system is applied for the prevention and prediction of parameters that represent a potential forest fire hazard Fig. 3 (1), and to identify people and/or motorized vehicles crossing a perimeter boundary Fig. 7 (1). In this scenario, it works upon automatic detection obtained within an area configured and protected by the system, where the drone sends autonomously the notifications Fig. 1 (5) to the associated receivers Fig. 7 (2).

Forest fire prevention and prediction is applied by integrating a neural network to classify images and recognize prediction intervals. Considering the following set of variables:
a) Ambient temperature.
b) Surface temperature.
c) Assignment of isotherms
d) Historical data on forest fires, according to dates and geographic area, percentage of humidity and precipitation.
e) Thermal imaging.
f) Hyperspectral imaging.
g) Measurement distance.
h) Fire detection.
i) Wind speed and direction.
j) Contour lines.

The alarms that are issued by the operators Fig. 2 (4) of the RPAs and also those issued through automatic detection by the UAS, are notified through an emergency call with voice recording Fig. 1 (5), made directly to the receivers Fig. 2 (5), to ensure receipt of the warning Fig. 1 (4), and in parallel a link with ID number containing the date and time associated with the event is sent to them. The alert notification is also sent to the administrator to monitor the activity of the receivers Fig. 8 (2).

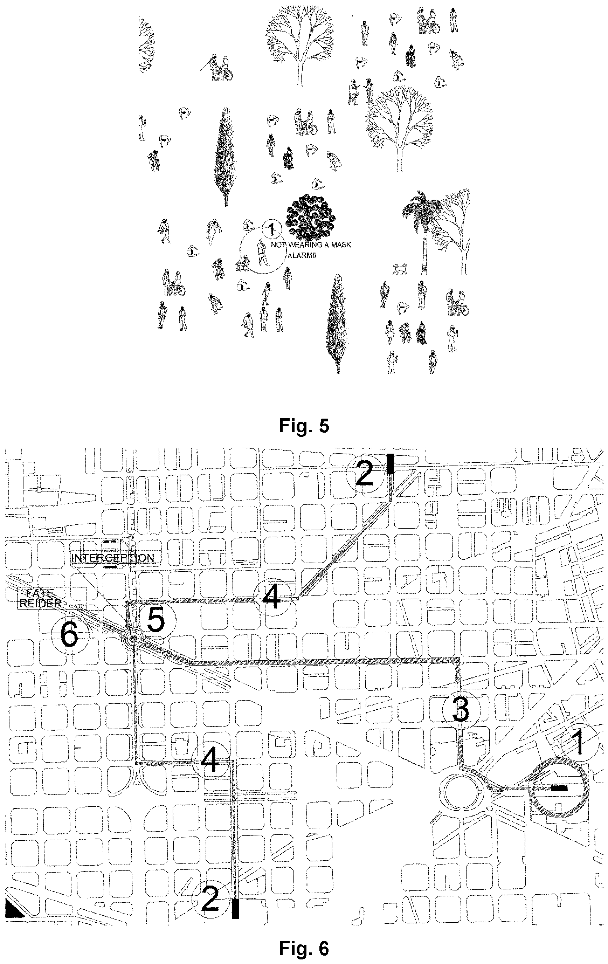

The sending of alerts is done through an emergency call with voice recording and the options (configurable) of SMS, email and Whatsapp, to the recipients Fig. 2 (5) and customer account manager, and allows them to view the link sent from any PC connected to the internet or smartphones with IOS or Android system to access:
1) Review the live transmission of the event Fig. 10 (1) emitted by the RPAs and/or UAS Fig. 2 (1). The live transmission will have a limited time in seconds or minutes (configurable), this way the receivers can review a brief outcome of the event Fig. 10 (2) to review the scope of the event Fig. 2 (2) and execute the corrective action according to their respective procedure.
2) Open the GPS location map with detailed distances Fig. 10 (5)(6) and fastest routes to the event site. Fig. 10 (4).
3) The administrator can visualize on the location map, who is or are going to the event location Fig. 10 (5), Fig. 7 (2), Fig. 6 (2), the rest of the receivers Fig. 10 (6), can also see who is or are going to the event location Fig. 10 (4), and depending on the type of event, they determine whether or not to go to the location, according to their internal procedures.
4) The platform leaves a record in the database of:
   a) An excerpt of the recording with time (configurable).
   b) High resolution images (configurable).
   c) Images with different zoom levels (configurable).
   d) Thermal imaging (configurable) Fig. 2 (8).
   e) Hyperspectral imaging (configurable).

This information record is only accessible to the administrator, who logs in with his credentials Fig. 9 (2) in the customer account.

The event log information and the data associated with the procedure carried out on them is automatically stored in the private *cloud* (*cloud computing*) Fig. 2 (7), in the private session of the client account Fig. 9 (1) associated with the platform. The platform can store large amounts of big data, and allows the platform to be available instantly and securely anywhere in the world, through the data stored in it, statistics are generated with all the information collected by the RPAs and UAS.

The administrator has at his disposal specific functions for special cases:
A) Interlocking of the RPAs or UAS Fig. 8 (7) at the site of the event Fig. 8 (1) so that the drone continues recording in case of a particular event until its autonomy allows it, once its battery is consumed, it can return autonomously to its charging base.
B) Activation of the emergency system through a direct option Fig. 8 (8), the platform allows to synchronize other UAS that are associated to the same customer account to go to the event site Fig. 4 (3) to provide support, and to allow the first drone Fig. 4 (2) to return to its charging base, at the end of its autonomy.
C) Tracking of people and motorized vehicles Fig. 6 (1); in the case of RPAs, it is by selecting the object in the touch panel Fig. 6 (1). In the case of UAS, automatic detection is triggered when a configured object (people and/or vehicles) is detected crossing a protected and configured boundary or perimeter Fig. 7 (1). For both cases, the platform has a method and system that allows predicting the destination route Fig. 6 (6), Fig. 7 (5) of the selected object Fig. 6 (1), or detected in the case of UAS Fig. 7 (1), this option allows the receivers to intercept the targets in less time Fig. 6 (5), Fig. 7 (5), to increase the probability of capture in less time.
D) Prediction and prevention of forest fires by analysis of terrain parameters, where the UAS remotely and autonomously detects elements that represent risks within a wide area of terrain, Fig. 3 (2). For example, high temperature objects FIG 3 (1) by assigning isotherms with the on-board thermal imager.

In the private cloud session FIG 2 (6), a database FIG 2 (8) is created to obtain statistics with the performance of the receivers FIG 2 (5), the detail of those who attend the requests, the detail of their journeys to the locations of each event FIG 6 (4), FIG 7 (4) and the times they take to reach each location. Alarms are configurable, and allow assigning different categories of events FIG 1 (3), with different receivers assigned FIG 2 (10), for example: fire, sanitary emergency, accident, robbery, assault FIG 1 (3); each alarm FIG 1 (5), is assigned to be transmitted FIG 2 (9) to the receivers corresponding to its area FIG 2 (5). Configurable and adaptable for each customer account.

The client accounts have a system for processing statistical data on the activity associated with the performance of the receivers. This operates through the application of an algorithm to evaluate the procedure of the receivers based on the following set of variables.
a) Response time in answering the call.
b) Response time to open the link sent.
c) Response time to press the option to go to the event location.
d) Response time to the place of the event.
e) Type of mobilization to the event site Fig. 3 (1), Fig. 2 (2), Fig 7 (1): on foot, bicycle, motorcycle, car, van, truck, tank, helicopter, airplane (configurable and editable by the administrator).
f) Geographical distance to the event site.
g) Vehicular traffic on the destination route.
h) Contour lines of the affected territory.

### BRIEF DESCRIPTION OF THE FIGURES

Figure 1 illustrates the detection of an event on the drone control screen as seen by the operator while piloting the RPAs. It also illustrates the customizable alert notification options on the control touch panel and how the signal is transmitted to the troubleshooters (receivers).
Figure 2 shows the detail of the complete process, from what is captured by the RPAs and the transmission chain until the detection of the problem reaches the receivers. It also illustrates how the receivers come to solve the problem, leaving a record of the procedure.
Figure 3 illustrates the automatic detection of a high-temperature object or campfire by the UAS through neural network processing; the remote detection of the problem in an agricultural or forestry plantation is visualized.
Figure 4 illustrates the detection of a fire and the activation of the emergency system issued by the administrator, with the system deployed and operational.
Figure 5 shows an example of use applied to health emergencies, in which the operator, upon detecting a person without a mask or face protection, activates the warning alert to the associated receivers.
Figure 6 shows the advanced vehicle path prediction function, where the RPA operator identifies an assault and/or vehicle theft, and proceeds to activate the alarm and select the object (car) to transmit the alert to the receivers, sending an alternative route so that they can intercept the target in less time.
Figure 7 describes the machine learning function integrated in the UAS, to demonstrate the performance of the neural network in detecting and predicting the destination route of vehicles crossing a border boundary, triggering alerts, and sending from the intersection point to the receivers.
Figure 8 illustrates the additional functions available to the platform administrator, who can override the alarm or activate the drone interlock function. Both functions, when used, are backed up in the platform's log history.
Figure 9 shows an example of how to access the platform, describing the access detail for administrators by logging into the platform client account with their credentials, and the detail of how operators access through the touch panel integrated in the remote control of the drones.
Figure 10 illustrates the detection of an event obtained from the aerial view of the drone. This case exemplifies a brief assault; in addition, the monitoring from the administrator's panel is illustrated with the detail of the receivers' actions.

### BEST WAY TO REALIZE THE INVENTION

The platform contains a platform as a service (PaaS) development, which is composed of open-source technologies, and is powered by artificial intelligence (Al). The platform software is integrated with the open-source Linux software development kit (SDK) of the drones used. This way, new functionalities are integrated and managed from the platform with its cloud-based environment.

The drones incorporated in the platform contain mobile software development kits (SDK), embedded SDK and Windows SDK provided by the manufacturer that are used for the technological integration of the drones in the platform. The development of the platform contains an administration *backend* where the reports associated with the ID, users, and previous locations are managed to create visualizations for tracking. All this data is consumed from the *web service* (*cloud computing*). In the infrastructure and architecture, the development of the modules is based on the following technologies: BackEnd: PHP 7.2, Laravel 7. FrontEnd: Framework: (VueJS). CSS Framework: (Bootstrap). Database: MySQL Web version control: Bitbucket. The development of the App Desktop is based on the following technologies: App Frontend: NodeJS 12.x, ElectronJS 9.x. App Backend: C++, DJI Onboard SDK. Database: SQLite. Web version control: Bitbucket. Implementation of the system on the server: Amazon AWS.

For the UI/UX development of the platform: the integration of the drone's touch panel control interface is modified using the open-source mobile SDK designed to access the drone. Through this mechanism, its camera is also accessed; this simplifies the UI development process, as the lower-level functionalities are predefined with the default SDK. In addition, integrated lines of code take care of battery management, signal transmission, communication, and flight stabilization. The SDK lines of code with the low-level functions are reused and integrated into the new platform software package. Then the library provided by the manufacturer plus *open-source* libraries are imported to customize the widgets, together with the company data, main logo, and intercom links. Subsequently, different development tests are performed: flight automation and camera controls on the lower gimbal; receiving real-time video and sensor data; downloading saved media; and finally, monitoring the status of the other components. The interface is optimized for responsive mobile web, to be used on multiple devices and to deliver a solution in visual, operational, and functional development, which is executed with a *Mobile First* approach. This means designing for *responsive design webs,* mobile first, thus forcing to focus only on the most important elements and actions of a website, with the creation of a good user experience and usability. Finally, the following test protocols are developed: security tests, test: *OWASP T10*, with the *detectify.com* tool. Configuration tests: report with configuration file for *dev. and prod.* environments. Specifying the necessary libraries for the platform operation. Stress testing: *Load Impact,* with the tool *loadimpact.com.* Load Testing: *Load Impact,* with the tool *loadimpact.com.*

The human resources information associated with the client account is integrated into the platform as follows: at the time of integrating the client account into the platform, all the client's information is transferred as the only source of data and data from third parties is not accepted, nor are noncompliances with the European GDPR standard applied. In human resources information, recipients are entered through the company's records protocol, these are entered internally to ensure their correct integration and feasibility in the platform, they are entered with their work schedules and the administrator has options to assign vacations and/or overtime. Administrators and operators have authorized credentials for access.

Operators: are assigned by the corresponding institution and are trained in the use of the platform. As a requirement, they must be qualified persons, and must have the special certification for handling RPAs according to the technical regulations of their respective country. They must also have a broad knowledge of the regulations and have knowledge of meteorology. These conditions are applied to all the countries where the platform is integrated, to guarantee the safety requirements and adaptation to the local impositions of each country or state. The drones used in this modality contain an emergency parachute, and the operator controls a drive device external to the remote control of the drone, for the activation of the parachute in case of emergency.

Managers: are assigned by the corresponding institution. For this position we recommend competent people, ideally with an engineering degree and with vast experience in decision making.

Recipients: are assigned by the corresponding institution. They must have competencies associated with the corrective actions they execute.

Each institution where the technology is integrated is responsible for the selection of personnel who use or are part of the client account associated with the platform.

In RPAs mode, the operator detects events through the image obtained by the drone's onboard camera. The cameras are high resolution video and photo, with high capacity zoom and radiometric thermal vision. Cameras with all sensors integrated into the camera are recommended to leave room for additional weight allocation. Emphasis is placed on weight reduction and load optimization.

The alarms activated by the operator through the control interface of the platform, are activated through an open source IP telephony API in the cloud, to access voice call services, SMS and Whatsapp. The locations are integrated with the Maps API: Google Maps Platform integrated in the Google Cloud, the locations are sent using as criteria the receivers that are closest to the location of the event, and geolocation filters are also available in the different configurations integrated into the platform.

In UAS mode, the data transfer works autonomously, according to the automatic detections made by the drone. This system is designed for areas with low internet signal levels, for this different means of data transfer are made compatible:
1) 3G/4G/5G:
   a) a computer with a quad-core processor that integrates a CPU + GPU + ISP on a single chip is integrated. This allows to have high processing capacity with a reduced weight of 197 grams on board of a compatible drone series matrice 100, 200 and 600. The connection to establish the link in real time, is done with a USB to TTL cable (FT232BL) and a double-headed USB cable; to access the system and apply the configuration, a monitor is connected to the HDMI port. For the ethernet configuration, the available RJ45 ethernet port is connected and the automatic IP is assigned if the DHCP service is available, otherwise the IP address is assigned manually.
   b) a Jetson AGX Xavier AGX board with Micro-B USB connector is connected to the on-board processor of the drone with a capability designed for neural network processing.
   c) an EU 4G LTE 3G industrial router with high power gain is connected to the on-board processor. For this link it is recommended to use mini-PCIe chip with Intel 7260 HMW wireless adapter supporting 802.11 and 802.11ac protocols. Drivers for this model are pre-installed. To make this mode scalable, 5G router use will be added as soon as it becomes available. The connection from the routers to the on-board processors is via ethernet.
   The devices: processor, graphics card and router, are placed in a housing designed in high strength acrylonitrile butadiene styrene (ABS) material, with a special design that allows ventilation from the lower area without losing airtightness, the design integrates a gasket next to the top cover, internally carries aluminum sheets to absorb temperature dissipation and a fan input 14V. The housing assembly, plus the interior elements, is installed on the top of the drone, and a model of housing and support is developed to make it compatible for use in drones of the Matrix 300 series. This series is a new version of drones with batteries of greater storage capacity to provide greater autonomy and versatility. The assembly is screwed into a duraluminium frame replacing the gimbal, designed to hold the housing.
• 2) Wimax: For special cases where 3G/4G/5G coverage is not available, a system for data transmission and reception will be implemented. This alternative will be generally applied for customers in rural areas, which uses an omnidirectional wifi receiver with a frequency spectrum that varies according to the region of implementation in the following ranges, American Continent: 2.3GHz, 2.5 and 5.7 GHz / Europe: 3.5 and 5.8 GHz; possible: 2.5 GHz / Southeast Asia: 2.3, 2.5, 3.3, 3.5 and 5.8 GHz / Middle East and Africa: 3.5 and 5.8 GHz. With the application of the IEEE 802.16e standard for portable and mobile use. This system transmits data point to point through radio frequency waves, for this the same transmission channel is configured for the mobile TX transmitter (drone) to emit data to the stationary RX receiver (antenna). Being omnidirectional, it is suitable for the link with drones in constant movement, covering a radial distance of up to 70KM.
This system is applied for institutions that have omnidirectional Wimax antennas, in this way the client account is integrated to the platform and used with this system. This system is subject to prior evaluation of the gain power and omnidirectionality tests of your antennas. That is, link calculations in the Fresnel zone. The calculations are applied according to the classification of propagation models and these are adapted to the geographical characteristics of the place where the project is applied. In addition, it is subject to the respective radio frequency spectrum regulations of each country, and also to the ownership of the antennas, whether they belong to the client or to the telecommunication services company.

In the functions for autonomous operation (UAS) and target path prediction, a *machine learning* algorithm is developed in the field of image-based inspection. A model feedback methodology is also developed. One option is to apply the concepts developed in the *fleet learning* methodology, which is the basis of TESLA's autonomous driving system. For this, a series of activities are developed: first, research on *open source* libraries that generate object recognition is carried out, which is done to select the one that best suits the requirements of the project. Then, the engine must be trained with the data corresponding to the most commonly used *datasets*, these data are enriched with the use of the same engine during the application of the program.

### INDUSTRIAL APPLICATION

Public Safety: The platform integrated in these tasks can be integrated in the following institutions: Police, Carabineros, Firefighters, Citizen Security, Emergency (ambulances), Brigades in charge of border control. Each institution has its own client accounts that contain all the information associated with the detection of events in their area, for example: The platform when integrated in police institutions associated with a city, state or country, the operators activate the alarm signal when detecting an abnormal parameter: robbery, assault, public disorder, traffic accident, etc., and the alarm is directed to the receivers. and the alarm is directed to the receivers: (police) that are in the nearest location, to address the problem in the shortest time possible, to simplify their transfer to the place they are sent a link with the location map that allows them to go to the place of the event in the most expeditious and fast way, in parallel the link with the details of the detected abnormality is sent to their headquarters (administrator) who monitors the details of what happened, and verifies that receivers go to the place of the event. The administrator also has access to review the result of the operation, with the details and performance of the action performed by the receivers, and the information is stored in the detailed history.

The platform allows the configuration of alarms with customized receivers, which addresses multiple public safety issues and is implemented designed for use in: municipalities, regional governments and/or states. Operators have an interface with different activation options, associated to different abnormal parameters such as: robbery-assault-public disorder, fire, accident, terrorist attack, detection of explosive elements, etc. In this way the alarms are directed to the most suitable and competent receivers to attend the detected problem, and simultaneously the alarms are received by the administrator, who monitors at all times the event detections, who also has the additional options.

Forest Fires: The platform integrated to these tasks is designed for the automatic detection of abnormal parameters that present a potential danger of forest fires, such as: Detection of a glass bottle at high temperature in the middle of grasslands or a forest forest, detected from a distance. Or a campfire or barbecue, detected in a forbidden area in a forest forest, detected from a distance. The two cases mentioned above are some of the circumstances that currently represent potential danger of forest fires and the current method is designed to detect these abnormalities to give immediate warning and in case of detection of an active fire, detect it at its earliest stage to increase the chances of being controlled in time to reduce the risk of mega-fires. Client accounts that address this type of problem, the neural network classifies fire images and/or abnormal parameters according to the input values of the isotherm mapping, detected by the radiometric thermal sensor. Sending instant warnings to the recipients: forest brigadiers, forest rangers, national forestry commission (Conaf). The administrator who supervises the work of the receivers,

The objectives of the industrial application of the method are:
1) Improve event notification times. The alarm of the detection of the abnormal parameter will be sent directly to the people in charge of the corrective action and who are also more accessible, reducing the time to solve the problems.
2) By keeping a detailed record of the recipients' locations, with the tracking of their actions and mobilization times to the site of the event. Statistical data associated with the performance of the problem solvers and their managers is obtained. This allows to improve the productivity and collective performance of the organizations involved.
3) The information is backed up with strict security protocols, without being able to be deleted, which contributes to the reduction of negligence on the part of those directly responsible for solving the problems (receivers) and their managers (administrators).
4) It avoids human and professional resources in traceability control tasks.
5) It avoids the use of physical space for information storage.
6) Contributes to the circular economy by avoiding waste of polluting elements and at the same time reduces the economic cost of physical storage elements.
7) Keep a total and secure control of the information with a neat and efficient interface.
8) The system can be customized for each of its different application areas.
9) It contributes to avoid the use of helicopters in similar functions, avoiding noise pollution and greenhouse gas emissions.
10) Operations are more cost effective by replacing the use of helicopters for these applications.
11) Compared to the current use of RPAs, the platform allows autonomous flight as UAS through flight scheduling, without the need to require two operators, being able to assign more efficient tasks to the organizations.
12) The areas of supervision can be extended thanks to the implementation of autonomous flights, thus covering important areas that currently cannot be supervised.
13) The platform allows to select the area to be monitored in a fast and practical way.
14) In case of detecting an abnormality through the predictive analysis functions, or an imminent fire, the UAS will automatically notify all those involved, reducing action times.
15) By transmitting alert notifications directly to the recipients, they will be able to visualize in detail the exact location of the event, avoiding alterations in the information transfer chain.
16) The configuration of the interzone limit, being configurable, and being able to program the RPAs or UAS to automatically detect the locations of the receivers closest to the place of the event, will be able to optimize by filtering the most suitable receivers for sending notifications and responsibility assignments, sending exclusively to them the alarm notification with this information, in this way the work will be optimized, so that it will be more productive.
17) The platform administrator, by having access to remove a possible false alarm, will allow the autonomously operating UAS to learn and refine their operation to be increasingly accurate in fire predictions and/or boundary detection. It will also be possible to deactivate this option in case the administrator makes a mistake, a functionality that prevents the client account from making future mistakes, perfecting more and more the application method without allowing the cancellation record to be deleted.
18) In case of locating an active fire, in addition to generating an instant warning -which will also reach firefighting personnel located within the configured area-, UAS and/or RPAs will be able to remain on site to support fire management. Machine learning algorithms will analyze focused isotherms, wind direction, terrain levels and type of trees or grassland, etc. This data will be processed in the big data cloud instantaneously, to deliver instructions to the UAS and/or RPAs on the most effective extinguishing tactics so that firefighters know where to prioritize fire management first.
19) Unlike the current system where the memory is extracted in physical storage devices such as CDs or hardware, the platform sends all the information obtained in the event detections directly to the cloud, where it will be securely stored, avoiding time, costs and personnel for information traceability.
20) The information is stored in the private cloud with high security standards and cannot be deleted, unlike the manual handling of information that is completely susceptible to loss.
21) Information stored in the cloud will enable data-driven decisions to be made quickly and accurately, with the application of Al.
22) RPAs will be able to perform automatic tracking of motorized vehicles, by selecting an option in the control touch panel of each drone, facilitating the tracking of the selected objects and the transfer of information to the receivers.
23) Through machine learning and predictive analysis functions, RPAs, once the target to be tracked (motor vehicle) is selected, will be able to predict the target's destination route and send interception routes to receivers to ensure capture in less time.
24) By improving the overall performance and productivity associated with forest fire prevention efforts, it will reduce the likelihood of mega-fires, preventing them from exceeding the critical threshold towards fires that are difficult to control.

## Claims

**1.** Method that, by means of unmanned aerial vehicles and unmanned aerial systems Fig. 2 (1), allows to detect Fig. 2 (2), transmit Fig. 2 (9) and track Fig. 6, Fig. 7 in a fast and safe way the information of abnormal parameters Fig. 3 (1), Fig. 2 (2), Fig 7 (1). **CHARACTERIZED in that** it comprises:
a) A control interface Fig 1 (2) and a customized alarm activation interface Fig 1 (3), integrated and projected to the touch panel of the remote system Fig. 2 (3) of the drone Fig. 2 (1), to activate the emergency warnings "events" Fig. 3 (1), Fig. 2 (2), Fig 7 (1).
b) Send the alarms triggered through the interface, directly Fig. 2 (9) to the persons in charge of executing corrective and preventive actions (receivers) Fig 1 (4), Fig 2 (5), and in parallel and simultaneously to the managers (administrators) associated with the customer account.
c) Set the number of receivers to whom you want to send the alarm notification Fig. 2 (9). and the custom receiver assignment.
d) Compatibility of event detection Fig. 2 (2) performed by operator piloted drones, Fig. 2 (4) (RPAs). And operating autonomously as unmanned aerial systems (UAS) Fig. 3, Fig. 7. And sending alarms Fig. 2 (9), automatically, when the drones Fig. 2 (1), operate autonomously as UAS, by means of the recognition of predefined parameters Fig. 3 (1) and classified by a neural network, integrated in the platform.
e) To generate an intercommunication link Fig. 2 (9) for connection Fig. 6, Fig. 7 from the signal Fig. 2 (9), emitted by the drones Fig. 2 (1). And track the activity performed by managers, Fig. 2 (6)(8), receivers Fig. 2 (5) and operators Fig. 2 (4), to record efficiency Fig. 2 (7) and generate productivity statistics Fig. 2 (8). Associated with their response times in carrying out corrective and preventive actions. Fig. 6 (2) Fig. 7 (2), Fig. 10 (5).
f) Store the entire record Fig. 2 (7) of information Fig. 2 (8), associated with the events Fig. 2 (2), captured by the drones Fig. 2 (1).

**2.** Method according to claim 1, CHARACTERIZED because: through the customizable interface Fig. 1 (3), the platform has a module for sending notifications Fig. 2 (9) in a direct and adaptable way, to allow (optionally) the possibility of linking several receivers from different areas Fig. 2 (10), and classify the alarm warnings as selected by the operator Fig. 2 (4). Or also to adapt it for a single specific area of application.
Method according to claim 1, **CHARACTERIZED in that**: The notification Fig. 2 (9) of the set parameter will be by emergency call with voice recording and in parallel the alert notifications issued by the RPAS and UAS Fig. 2 (1) will be sent, in configurable options: SMS, whatsapp, Email, to make sending a link with the event code, plus the date and time, and compatible to be received in smartphones, Tablet and/or PC equipment connected to the internet (associated to the customer account).

**4.** Method according to claim 3, **CHARACTERIZED in that**: the content sent in the alert notification Fig. 2 (9) contains the following:
a) A link to access the live transmission of the drone Fig. 10 (1), Fig. 10 (4), Fig. 8 (1), for a few seconds or minutes (configurable time) and once the projected parameter has been checked, the recording expires. without being stored in the receiver logs Fig. 2 (5). This option is adaptable and (optional) and can be activated in the customer accounts that deem it convenient.
b) A link to access the GPS location map, with the option of the fastest and most expeditious route to the event location Fig. 10 (5). And in case the client account has enabled the first option (a), the interface will contain a shortcut within the live transmission, to access the GPS location map Fig. 10 (3).

**5.** Method according to claim 4, **CHARACTERIZED in that** it comprises: the function to visualize on the GPS location map displayed at the time of accessing the reported event, the location of all receivers assigned Fig. 10 (5)(6) in the configured range.
The administrator and also the rest of the receivers will be able to see who is attending the event Fig 6 (2), Fig. 7 (2).

**6.** Method according to claim 1, **CHARACTERIZED in that** it comprises: the control possessed by the manager Fig. 2 (6), over the platform segmented as follows:
a) The administrator is the only one who has full control of the platform in his client account Fig. 9 (1), accessing with his User ID and password Fig. 10 (2), to have access to supervise the activity of the receivers Fig. 1 (4) and to review the statistical data Fig. 2 (8), which cannot be altered.
b) The administrator is the only one who has the option to cancel Fig. 8 (6), an alarm notification issued Fig. 1 (5), by an operator Fig. 2 (4), or by a drone operating autonomously Fig. 3. If the alarm is cancelled, the record of the cancellation will be stored Fig. 2 (8), and associated with the event ID, without being able to be deleted from the log history. And if the administrator cancels an alarm, a box is instantly displayed on the user interface of the PC or smartphone, where the reason for the cancellation of the alarm must be justified.
c) An alternative is available to the administrator to correct an error in case of an alarm cancellation Fig. 8 (6), "by mistake". In order not to disturb the functioning of the neural network integrated in the autonomously operating drones (UAS) Fig. 3, and without the cancellation record being deleted.
d) The administrator has a function that allows him to activate the drone interlock Fig. 8 (7), when deemed necessary. When this option is activated, the drone will remain at the event site Fig. 7 (1), to record and store the information in the cloud Fig. 2 (7), until its autonomy allows it. The method applies to drones operating autonomously.
e) The administrator has a function that allows him to activate an emergency system Fig. 8 (8), so that other drones Fig. 4 (3), associated to the client's account (configurable quantity) go to the place of the event Fig. 4 (1), to provide support, making possible the coordination between drones. This allows the first drone Fig. 4 (2). to return to its base load, enabling other drone(s) to collect data continuously, without losing the information associated with a particular event. The method applies to drones operating autonomously.

**7.** Method according to claim 6, **CHARACTERIZED in that** it comprises: the option to activate the interlock in remotely controlled drones (RPAs). The administrator activates the function Fig. 8 (7), and notification is instantly transmitted to the operator Fig. 2 4), authorizing him to activate the function locally. When the drone loses its payload capacity, it notifies the operator and returns to the operator's physical location Fig. 2 (4), without having to comply with safety regulations in restricted locations.

**8.** Method according to claim 6, **CHARACTERIZED in that** it comprises: the option to activate the emergency system Fig. 8 (8) in remotely piloted drones (RPAs). The administrator activates the function and notification is instantly transmitted to the other operator(s) Fig. 2 4), which are within a radial perimeter boundary, previously defined (configurable) solely for this option. When the drone loses its charge capacity, it notifies the assigned operator and returns to its physical location Fig. 2 4), while the event site continues to be monitored by the other drone(s), controlled by their respective operators Fig. 2 4), until the administrator cancels the emergency status or until the autonomy of its batteries allows it, without passing to carry out the safety regulations in the restricted locations.

**9.** Method according to claim 6, **CHARACTERIZED in that**: the administrator has options to call a particular receiver, and/or send direct or group messages, to send instructions to all the receivers associated to the event, directly from the platform.

**10.** Method according to claim 8, **CHARACTERIZED in that**: the platform allows the administrator to select within the GPS location map the active receivers within an event, Fig. 2 (5), Fig. 6 (2), Fig. 8 (2). to instruct special indications.

**11.** Method according to claim 1, **CHARACTERIZED in that** it comprises: a database with the detailed history Fig. 2 (8), on the historical record of each event, to store the following information:
a) An excerpt of the event recording with time (configurable).
b) High resolution images (customizable).
c) Images with different zoom levels (customizable).
d) Thermal and/or thermographic images (customizable).
e) Hyperspectral imaging (customizable).
All images are configurable and according to the application associated to each customer account.

**12.** Method according to claim 11, **CHARACTERIZED in that** it comprises: the capacity to store the information collected by the drones, allowing monitoring and access to this data stored in the cloud server Fig. 2 (7), associated to the client account Fig. 9 (2), with options to review the information in a customized way, by selecting monthly, annual and seasonal summaries periods: (autumn, winter, spring, summer). In addition, it has customizable filter options to add time ranges to the selected dates Fig 2 (6)(7)(8).

**13.** Method according to claim 1 **CHARACTERIZED in that** it comprises: a system for processing statistical data from the platform associated with the performance of the receivers. This operates through the application of an algorithm to evaluate the receivers' procedure based on the following set of variables.
a) Response time to answer the call.
b) Response time to open the link sent.
c) Response time to press the option to go to the event location.
d) Response time to the event site.
e) Type of mobilization to the event site Fig. 3 (1), Fig. 2 (2), Fig 7 (1): on foot, bicycle, motorcycle, car, van, truck, tank, helicopter, airplane (configurable and editable by the administrator).
f) Geographical distance to the event site.
g) Vehicle traffic on the destination route.
h) Contour lines of the affected territory.

**14.** Method according to claim 13, **CHARACTERIZED in that**: it allows the receivers Fig. 2 (5), to check and confirm their means of mobilization: on foot, bicycle, motorcycle, car, van, truck, tank, helicopter, airplane. In case of an error, the administrator can be notified directly from the platform user interface.

**15.** Method according to claim 3, **CHARACTERIZED in that** it comprises: different configurations for selecting the alarm signal transmission mode Fig. 2 (9), segmented as follows:
a) Configurable perimeter boundary options in classifications: radial in meters and/or kilometers, or sectoral by assigning communes, cities, provinces, states, or regions. To limit the sending of the alarm signal Fig. 2 (9) to the receivers that are within the assigned perimeter limit, according to the detection of the GPS and/or GNSS coordinates of the receivers and the assignment of a minimum and maximum limit of receivers.
b) Automatic recognition of receivers Fig. 2 (5), Fig. 10 (5), at the closest and most expedient location to the event site Fig. 10 (4), without considering perimeter boundaries, with the assignment of an exact number of receivers (configurable).
c) Configuration to add to options (a) and (b) the option to assign differentiated time ranges, to assign the minimum and maximum number of receivers associated to an event, depending on the demand of its activities.

**17.** Method according to claim 1, **CHARACTERIZED in that** it comprises: the application of a neural network to classify images and recognize prediction intervals, to prevent and predict forest fires, considering the following set of variables:
a) Ambient temperature.
b) Surface temperature.
c) Assignment of isotherms:
d) Historical data on forest fires, according to dates and geographic area: percentage of humidity and precipitation e) Thermal images.
f) Hyperspectral imaging.
g) Measurement distance.
h) Fire detection.
i) Wind speed and direction.
j) Contour lines.

**18.** Method according to claim 17, **CHARACTERIZED in that** it comprises: the capacity to classify these objects autonomously: a) persons b) motor vehicles. By means of neural network processing.

**19.** Method according to claim 18, **CHARACTERIZED in that** it comprises: the capacity to autonomously detect objects identified by the neural network: a) people, b) motor vehicles. That cross a geographical boundary (configured), Fig. 7 (1) according to the set coordinates.

**20.** Method according to claim 19, **CHARACTERIZED in that** it comprises: the application of a machine learning algorithm, which allows predicting the route of the destination Fig. 6 (6), Fig. 7 (5), of the objects set: motorized vehicles and/or persons detected by the drones operating autonomously as UAS.

**21.** Method according to claim 20, **CHARACTERIZED in that** it comprises: a mechanism that allows predicting the route of the destination Fig. 6 (6), Fig. 7 (5), of the objects, selected in the touch panel Fig. 6 (1) of the remote control Fig. 2 (3), of the drones, operating as RPAs.

**22.** Method according to claim 19, 20 and 21 **CHARACTERIZED in that** it comprises: the capacity to send the receivers Fig. 6 (2), Fig. 7 (2), to the fastest intersection point existing Fig. 6 (6), Fig. 7 (5), between the receivers Fig. 6 (2), Fig. 7 (2), and the tracked object Fig. 6 (1), Fig. 7 (1), according to the destination path prediction Fig. 6 (6), Fig. 7 (5), thereby enabling:
a) The ability to track for a configurable period of time the object that exceeded the set limits.
b) The ability to perform the function on drones operating as RPAs and UAS.
c) The ability to update the trajectory prediction, in case of detecting a change in the prediction, by applying algorithm correction and feedback.
